(19) Europäisches Patentamt
European Patent Office
Office européen des brevets

(11) **EP 4 235 211 A1**

(12) **EUROPEAN PATENT APPLICATION**

(43) Date of publication:
**30.08.2023  Bulletin 2023/35**

(21) Application number: **23151302.9**

(22) Date of filing: **12.01.2023**

(51) International Patent Classification (IPC):
**G01S 7/40** *(2006.01)*   **G01S 7/497** *(2006.01)*
**G01S 13/86** *(2006.01)*   **G01S 13/931** *(2020.01)*
**G01S 17/86** *(2020.01)*   **G01S 17/931** *(2020.01)*
**G01S 7/00** *(2006.01)*   **G06T 7/80** *(2017.01)*

(52) Cooperative Patent Classification (CPC):
**G01S 13/931; G01S 7/003; G01S 7/403;
G01S 7/4034; G01S 7/4091; G01S 7/4972;
G01S 13/865; G01S 13/867; G01S 17/86;
G01S 17/931; G06T 7/80;** G01S 2013/9316;
G01S 2013/9323; G01S 2013/93271;
G01S 2013/9329

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.02.2022  US 202217682312**

(71) Applicant: **GM Cruise Holdings LLC**
**San Francisco, CA 94107 (US)**

(72) Inventor: **LU, Siyuan**
**San Francisco (US)**

(74) Representative: **Barton, Russell Glen**
**Withers & Rogers LLP**
**2 London Bridge**
**London SE1 9RA (GB)**

(54) **RETROFLECTOR ON AUTONOMOUS VEHICLES FOR AUTOMATED BUDDY CAMERA, LIGHT DETECTING AND RANGING, AND RADIO DETECTION AND RANGING CALIBRATION**

(57)    The present disclosure is directed to checking and updating the calibration of a sensing apparatus at an autonomous vehicle (AV). After a sensing apparatus of an AV has been initially calibrated (e.g., when the AV is manufactured) calibration of that sensing apparatus may be checked or updated using data collected from similar vehicles of a fleet of vehicles. Each of the different vehicles of this fleet may identity its location and report that location. A first of these vehicles may receive data that identifies the location of a second vehicle. A sensing apparatus of the first vehicle may then identify locations of features at the second vehicle and a processor of the sensing apparatus may perform calculations to identify whether calibration of the sensing apparatus has changed. Parameters that adjust the calibration of the sensing apparatus may then be updated to maintain calibration of a sensing apparatus within acceptable tolerances.

FIG. 2

EP 4 235 211 A1

**Description**

**BACKGROUND**

1. Technical Field

The present disclosure is generally related to calibrating a sensing apparatus. More specifically, the present disclosure is directed to solutions that prevent drift in a sensing apparatus.

2. Introduction

Autonomous vehicles (AVs) are vehicles having computers and control systems that perform driving and navigation tasks that are conventionally performed by a human driver. As AV technologies continue to advance, they will be increasingly used to improve transportation efficiency and safety. As such, AVs will need to perform many of the functions that are conventionally performed by human drivers, such as performing navigation and routing tasks necessary to provide a safe and efficient transportation. Such tasks may require the collection and processing of large quantities of data using various sensor types, including but not limited to cameras and/or Light Detection and Ranging (LiDAR) sensors, and radio detection and ranging (radar) elements disposed on the AV.

**BRIEF DESCRIPTION OF THE DRAWINGS**

Certain features of the subject technology are set forth in the appended claims. However, the accompanying drawings, which are included to provide further understanding, illustrate disclosed aspects and together with the description serve to explain the principles of the subject technology. In the drawings:

FIG. 1 illustrates a series of steps that may be implemented when calibration of a sensing apparatus is maintained.
FIG. 2 illustrates two different vehicles that include features that a sensing apparatus may use to maintain calibration of the sensing apparatus.
FIG. 3 illustrates an example of a system for managing one or more Autonomous Vehicles (AVs) in accordance with some aspects of the present technology.
FIG. 4 shows an example of computing system that may be used to implement at least some of the functions reviewed in the present disclosure in accordance with some aspects of the present technology.

**DETAILED DESCRIPTION**

The detailed description set forth below is intended as a description of various configurations of the subject technology and is not intended to represent the only configurations in which the subject technology can be practiced. The appended drawings are incorporated herein and constitute a part of the detailed description. The detailed description includes specific details for the purpose of providing a more thorough understanding of the subject technology. However, it will be clear and apparent that the subject technology is not limited to the specific details set forth herein and may be practiced without these details. In some instances, structures and components are shown in block diagram form in order to avoid obscuring the concepts of the subject technology.

As described herein, one aspect of the present technology is the gathering and use of data available from various sources to improve quality and experience. The present disclosure contemplates that in some instances, this gathered data may include personal information. The present disclosure contemplates that the entities involved with such personal information respect and value privacy policies and practices.

The present disclosure is directed to checking and updating the calibration of a sensing apparatus at an autonomous vehicle (AV). This sensing apparatus may include several different types of sensors (e.g., a camera and a LiDAR or radar sensor). After a sensing apparatus of an AV has been initially calibrated (e.g., when the AV is manufactured) calibration of that sensing apparatus may be checked or updated using data collected from similar vehicles of a fleet of vehicles. Since each of the different vehicles of this fleet may be able to identity its own location and report that location to other vehicles or to a central computer system, other vehicles of that fleet may be configured to receive location data associated with nearby fleet vehicles. Once two different vehicles are withing a proximal distance of each other, a first of these vehicles may receive data that identifies the location of a second vehicle. A sensing apparatus of the first vehicle may then identify locations of features at the second vehicle and a processor of the sensing apparatus may perform calculations to identify whether calibration of the sensing apparatus has changed. Parameters that adjust the calibration of the sensing apparatus may then be updated to maintain calibration of a sensing apparatus within acceptable tolerances.

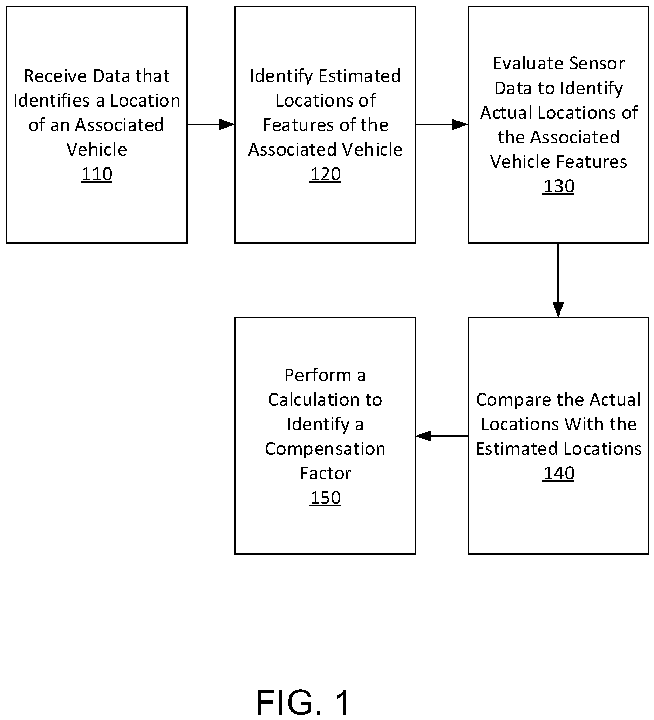

FIG. 1 illustrates a series of steps that may be implemented when calibration of a sensing apparatus is maintained. The steps of FIG. 1 may be performed at a sensing apparatus installed in a first vehicle of a group of associated vehicles. Each vehicle of this group of vehicles may be associated with each other for various reasons, they may have been manufactured for or by an entity that manages operation of a fleet of autonomous vehicles (AVs), the may be associated based on each of the vehicles including a sensing apparatus made for or by a same company, they may be associated based on a standard that links operation of a different AVs, or they may be associated with each other for other reasons. Each of these associated vehicles may include a set of features that may be used to evaluate, adjust, or maintain calibration of sensing apparatus that may be installed at each of the associated vehicles. FIG. 1 includes step 110 where data is received that identifies a location of an associated vehicle. The data received in step 110 may be received based on a first vehicle being located within a proximal distance of a second vehicle of the group of associated vehicles. The data received in step 110 may also identify a speed and/or a heading of the associated vehicle and may also include a timestamp. This location data may be received directly from a transmitter at the associated vehicle or may be received from a computer that communicates with electronic devices at each of the first vehicle and the second vehicle. Locations of each respective vehicle may be identified based on each of the vehicles including a global positioning system (GPS) and accuracy of a GPS location of a vehicle may be increased using assisted GPS. This assisted GPS may use the locations of landmarks (e.g., a location of a particular building, road marking, traffic sign etc.) measured by on-vehicle Lidar or camera system to increase accuracy. The assisted GPS may also use the receipt of signals transmitted from transmitters near a roadway to increase accuracy. Each vehicle may identify their own location using GPS data or assisted GPS.

When the first vehicle into the vicinity of a second vehicle of the group, data may be transmitted from the second vehicle to the first vehicle that identifies a location of the second vehicle. This data may also identify a heading of the second vehicle and a timestamp. Additionally, data may also be sent from the first vehicle to the second vehicle. Various methods may be used to initiate communications directly between vehicles, for example, the vehicles may broadcast low power signals that only close vehicles can receive, they may communicate using cellular signals or networks, or they may communicate with each other based on data received from a centralized computer. In instances when a centralized computer receives location data from various vehicles, that centralized computer may send data to particular AVs that identifies a location of another AV.

Next in step 120, locations of features located at the associated vehicle may be estimated. This estimation may be identified based on relative locations of the associated vehicle and on sensing apparatus of an AV that is being calibrated. Distances and heading between the different vehicles combined with prior knowledge of where those features should be located (are expected to be located) at the vehicle may be used to estimate locations of the features at the associated vehicle. These features may include visible features that have certain shapes (e.g., chevrons), may include features that a camera may view or reflectors/retroreflectors that LiDAR can view, or both. Such features may be located on one or more external surfaces of the vehicles and may be capable of being sensed by evaluation of different types of sensors at an AV sensing apparatus. For example, a feature of a vehicle may be sensed from received camera data and from received LiDAR sensor data.

Received sensor data may be evaluated in step 130 of FIG. 1 to identify actual locations of the features at the associated vehicle as measured by the sensor bearing vehicle (first vehicle). This may include identifying locations of several different features of the associated vehicle and validating that the distance between the vehicles and relative locations of the several different features of the associated vehicle. Next in step 140, the actual locations may be compared with the estimated location to identify an offset to associated with a set of sensors at the sensing apparatus. Step 140 may also compare location data of a first type of sensor (e.g., camera data) with location data of a second type of sensor (e.g., LiDAR data). After this offset is identified in step 140, a calculation may be performed to identify a compensation factor that compensates for the identified offset in step 150 of FIG. 1. The compensation factor may be used to adjust the calibration of the sensing apparatus. This may include adjusting parameters used to evaluate data from either a first type of sensor (e.g., a camera sensor), a second type of sensor (e.g., a LiDAR or radar sensor), or sets of combined sensors. Exemplary formula(s) of the calculation performed in step 150 is provided and described below.

$$\Delta\theta j = \text{Sum}(\theta'ij - \theta ij)/N \ (i=1..N)$$

and

$$\Delta\phi j = \text{Sum}(\phi'ij - \phi ij)(i=1..N)$$

The estimated position of feature (i) on the associated vehicle with respect to the first vehicle's sensor (j) can be denoted by zenith angle θij and azimuth angle φij. The actual position of the feature (i) on the associated vehicle as measured by sensor (j) on the first vehicle is as measured by the angle θ'ij and azimuth angle φ'ij. The angular calibration error of the sensor (e.g. camera or Lidar) may be obtained by formulas Δθj =Sum(θ'ij - θij)/N (i=1..N) and Δφj = Sum(φ'ij - φij)/N (i=1..N) where N is the number of features on the associated vehicle in the field of view of the jth sensor on the first vehicle.

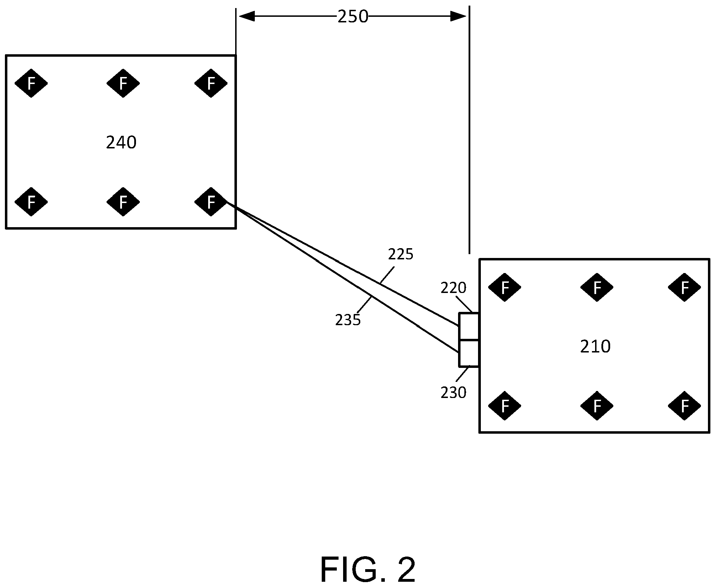

FIG. 2 illustrates two different vehicles that include features that a sensing apparatus may use to maintain calibration of the sensing apparatus. FIG. 2 includes a first vehicle 210 and a second vehicle 240. Each of these vehicles includes several features F that may be identified by a sensing apparatus. The first vehicle 210 includes a LiDAR sensor 220 and a camera sensor 230. Line 225 is associated with an angle that the LiDAR sensor senses one of the features F of the second vehicle 240 and line 235 is associated with an angle that the camera sensor senses the same feature F of the second vehicle 240. When the sensing apparatus of the first vehicle 210 and the second vehicle 240 are separated by a distance 250, angles associated with the camera sensor 230 and the LiDAR sensor 220 may be evaluated so that the calibration of the orientation of the sensing apparatus is updated. Additionally, or alternatively these angles may be used to identify offsets of the camera sensor 230 and the LiDAR sensor 220 with respect to the frame of the vehicle. In instances when relative distances of actual locations change over time, parameters of the sensing apparatus may be changed to compensate for this change.

Data from the sensors 220 & 230 may include data associated with several of the features F located at vehicle 240 that are visible to each of the sensors 220 & 230. This can allow a calibration process to evaluate data from several different points of a vehicle in order to more accurately perform a calibration function. FIG. 2 does not show relative motion between vehicle 210 and vehicle 240. This is because in certain instances, these vehicles may be moving in a same direction, possibly at a same or similar speed. When the two vehicles are moving in a same direction, vehicle 210 may maintain a same relative position relative to vehicle 240 when the calibration of the sensing apparatus is checked and possibly updated. This process could also include evaluating radar data to identify a distance that the two vehicles are separated during a calibration check or update process.

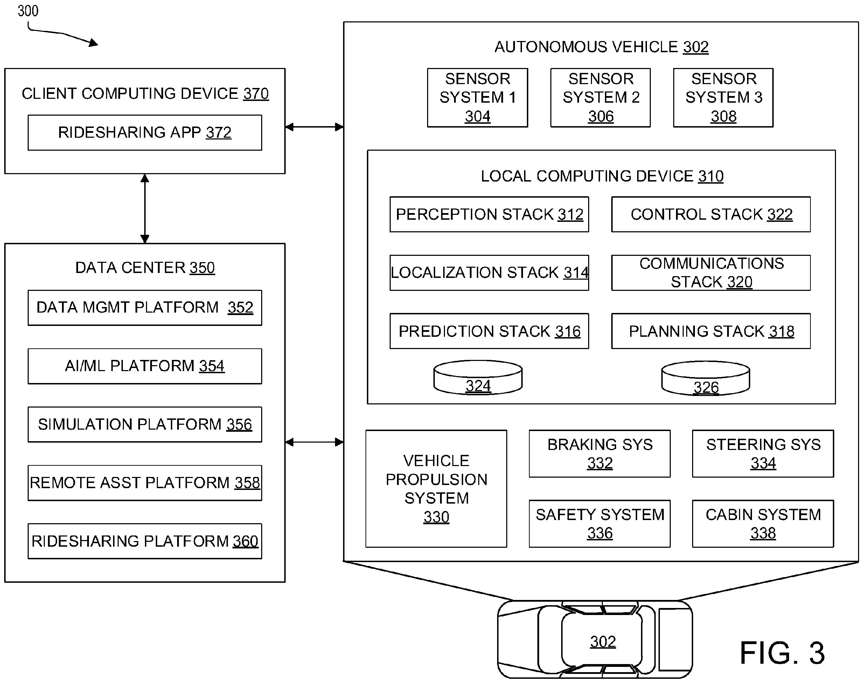

FIG. 3 illustrates an example of an AV management system 300. One of ordinary skill in the art will understand that, for the AV management system 300 and any system discussed in the present disclosure, there can be additional or fewer components in similar or alternative configurations. The illustrations and examples provided in the present disclosure are for conciseness and clarity. Other embodiments may include different numbers and/or types of elements, but one of ordinary skill the art will appreciate that such variations do not depart from the scope of the present disclosure.

If you train both of these tasks jointly, they can help each other add multiple tasks to a neural network specific to the task you are trying to solve can improve overall performance. Do multiple things and be used in multiple ways down-stream and improve training via multi-task learning framework.

In this example, the AV management system 300 includes an AV 302, a data center 350, and a client computing device 370. The AV 302, the data center 350, and the client computing device 370 can communicate with one another over one or more networks (not shown), such as a public network (e.g., the Internet, an Infrastructure as a Service (IaaS) network, a Platform as a Service (PaaS) network, a Software as a Service (SaaS) network, other Cloud Service Provider (CSP) network, etc.), a private network (e.g., a Local Area Network (LAN), a private cloud, a Virtual Private Network (VPN), etc.), and/or a hybrid network (e.g., a multi-cloud or hybrid cloud network, etc.).

The AV 302 can navigate roadways without a human driver based on sensor signals generated by multiple sensor systems 304, 306, and 308. The sensor systems 304-308 can include different types of sensors and can be arranged about the AV 302. For instance, the sensor systems 304-308 can comprise Inertial Measurement Units (IMUs), cameras (e.g., still image cameras, video cameras, etc.), light sensors (e.g., LIDAR systems, ambient light sensors, infrared sensors, etc.), RADAR systems, GPS receivers, audio sensors (e.g., microphones, Sound Navigation and Ranging (SONAR) systems, ultrasonic sensors, etc.), engine sensors, speedometers, tachometers, odometers, altimeters, tilt sensors, impact sensors, airbag sensors, seat occupancy sensors, open/closed door sensors, tire pressure sensors, rain sensors, and so forth. For example, the sensor system 304 can be a camera system, the sensor system 306 can be a LIDAR system, and the sensor system 308 can be a RADAR system. Other embodiments may include any other number and type of sensors.

The AV 302 can also include several mechanical systems that can be used to maneuver or operate the AV 302. For instance, the mechanical systems can include a vehicle propulsion system 330, a braking system 332, a steering system 334, a safety system 336, and a cabin system 338, among other systems. The vehicle propulsion system 330 can include an electric motor, an internal combustion engine, or both. The braking system 332 can include an engine brake, brake pads, actuators, and/or any other suitable componentry configured to assist in decelerating the AV 302. The steering system 334 can include suitable componentry configured to control the direction of movement of the AV 302 during navigation. The safety system 336 can include lights and signal indicators, a parking brake, airbags, and so forth. The cabin system 338 can include cabin temperature control systems, in-cabin entertainment systems, and so forth. In some embodiments, the AV 302 might not include human driver actuators (e.g., steering wheel, handbrake, foot brake pedal, foot accelerator pedal, turn signal lever, window wipers, etc.) for controlling the AV 302. Instead, the cabin system 338 can include one or more client interfaces (e.g., Graphical User Interfaces (GUIs), Voice User Interfaces

(VUIs), etc.) for controlling certain aspects of the mechanical systems 330-338.

The AV 302 can additionally include a local computing device 310 that is in communication with the sensor systems 304-308, the mechanical systems 330-338, the data center 350, and the client computing device 370, among other systems. The local computing device 310 can include one or more processors and memory, including instructions that can be executed by the one or more processors. The instructions can make up one or more software stacks or components responsible for controlling the AV 302; communicating with the data center 350, the client computing device 370, and other systems; receiving inputs from riders, passengers, and other entities within the AV's environment; logging metrics collected by the sensor systems 304-308; and so forth. In this example, the local computing device 310 includes a perception stack 312, a mapping and localization stack 314, a prediction stack 316, a planning stack 318, a communications stack 320, a control stack 322, an AV operational database 324, and an HD geospatial database 326, among other stacks and systems.

The perception stack 312 can enable the AV 302 to "see" (e.g., via cameras, LIDAR sensors, infrared sensors, etc.), "hear" (e.g., via microphones, ultrasonic sensors, RADAR, etc.), and "feel" (e.g., pressure sensors, force sensors, impact sensors, etc.) its environment using information from the sensor systems 304-308, the mapping and localization stack 314, the HD geospatial database 326, other components of the AV, and other data sources (e.g., the data center 350, the client computing device 370, third party data sources, etc.). The perception stack 312 can detect and classify objects and determine their current locations, speeds, directions, and the like. In addition, the perception stack 312 can determine the free space around the AV 302 (e.g., to maintain a safe distance from other objects, change lanes, park the AV, etc.). The perception stack 312 can also identify environmental uncertainties, such as where to look for moving objects, flag areas that may be obscured or blocked from view, and so forth. In some embodiments, an output of the prediction stack can be a bounding area around a perceived object that can be associated with a semantic label that identifies the type of object that is within the bounding area, the kinematic of the object (information about its movement), a tracked path of the object, and a description of the pose of the object (its orientation or heading, etc.).

The mapping and localization stack 314 can determine the AV's position and orientation (pose) using different methods from multiple systems (e.g., GPS, IMUs, cameras, LIDAR, RADAR, ultrasonic sensors, the HD geospatial database 322, etc.). For example, in some embodiments, the AV 302 can compare sensor data captured in real-time by the sensor systems 304-308 to data in the HD geospatial database 326 to determine its precise (e.g., accurate to the order of a few centimeters or less) position and orientation. The AV 302 can focus its search based on sensor data from one or more first sensor systems (e.g., GPS) by matching sensor data from one or more second sensor systems (e.g., LIDAR). If the mapping and localization information from one system is unavailable, the AV 302 can use mapping and localization information from a redundant system and/or from remote data sources.

The prediction stack 316 can receive information from the localization stack 314 and objects identified by the perception stack 312 and predict a future path for the objects. In some embodiments, the prediction stack 316 can output several likely paths that an object is predicted to take along with a probability associated with each path. For each predicted path, the prediction stack 316 can also output a range of points along the path corresponding to a predicted location of the object along the path at future time intervals along with an expected error value for each of the points that indicates a probabilistic deviation from that point.

The planning stack 318 can determine how to maneuver or operate the AV 302 safely and efficiently in its environment. For example, the planning stack 316 can receive the location, speed, and direction of the AV 302, geospatial data, data regarding objects sharing the road with the AV 302 (e.g., pedestrians, bicycles, vehicles, ambulances, buses, cable cars, trains, traffic lights, lanes, road markings, etc.) or certain events occurring during a trip (e.g., emergency vehicle blaring a siren, intersections, occluded areas, street closures for construction or street repairs, double-parked cars, etc.), traffic rules and other safety standards or practices for the road, user input, and other relevant data for directing the AV 302 from one point to another and outputs from the perception stack 312, localization stack 314, and prediction stack 316. The planning stack 318 can determine multiple sets of one or more mechanical operations that the AV 302 can perform (e.g., go straight at a specified rate of acceleration, including maintaining the same speed or decelerating; turn on the left blinker, decelerate if the AV is above a threshold range for turning, and turn left; turn on the right blinker, accelerate if the AV is stopped or below the threshold range for turning, and turn right; decelerate until completely stopped and reverse; etc.), and select the best one to meet changing road conditions and events. If something unexpected happens, the planning stack 318 can select from multiple backup plans to carry out. For example, while preparing to change lanes to turn right at an intersection, another vehicle may aggressively cut into the destination lane, making the lane change unsafe. The planning stack 318 could have already determined an alternative plan for such an event. Upon its occurrence, it could help direct the AV 302 to go around the block instead of blocking a current lane while waiting for an opening to change lanes.

The control stack 322 can manage the operation of the vehicle propulsion system 330, the braking system 332, the steering system 334, the safety system 336, and the cabin system 338. The control stack 322 can receive sensor signals from the sensor systems 304-308 as well as communicate with other stacks or components of the local computing device 310 or a remote system (e.g., the data center 350) to effectuate operation of the AV 302. For example, the control stack 322 can implement the final path or actions from the multiple paths or actions provided by the planning stack 318. This can involve turning the routes and decisions from the planning stack 318 into commands for the actuators that control the AV's steering, throttle, brake, and drive unit.

The communication stack 320 can transmit and receive signals between the various stacks and other components of the AV 302 and between the AV 302, the data center 350, the client computing device 370, and other remote systems. The communication stack 320 can enable the local computing device 310 to exchange information remotely over a network, such as through an antenna array or interface that can provide a metropolitan WIFI network connection, a mobile or cellular network connection (e.g., Third Generation (3G), Fourth Generation (4G), Long-Term Evolution (LTE), 5th Generation (5G), etc.), and/or other wireless network connection (e.g., License Assisted Access (LAA), Citizens Broadband Radio Service (CBRS), MULTEFIRE, etc.). The communication stack 320 can also facilitate the local exchange of information, such as through a wired connection (e.g., a user's mobile computing device docked in an in-car docking station or connected via Universal Serial Bus (USB), etc.) or a local wireless connection (e.g., Wireless Local Area Network (WLAN), Bluetooth®, infrared, etc.).

The HD geospatial database 326 can store HD maps and related data of the streets upon which the AV 302 travels. In some embodiments, the HD maps and related data can comprise multiple layers, such as an areas layer, a lanes and boundaries layer, an intersections layer, a traffic controls layer, and so forth. The areas layer can include geospatial information indicating geographic areas that are drivable (e.g., roads, parking areas, shoulders, etc.) or not drivable (e.g., medians, sidewalks, buildings, etc.), drivable areas that constitute links or connections (e.g., drivable areas that form the same road) versus intersections (e.g., drivable areas where two or more roads intersect), and so on. The lanes and boundaries layer can include geospatial information of road lanes (e.g., lane centerline, lane boundaries, type of lane boundaries, etc.) and related attributes (e.g., direction of travel, speed limit, lane type, etc.). The lanes and boundaries layer can also include 3D attributes related to lanes (e.g., slope, elevation, curvature, etc.). The intersections layer can include geospatial information of intersections (e.g., crosswalks, stop lines, turning lane centerlines and/or boundaries, etc.) and related attributes (e.g., permissive, protected/permissive, or protected only left turn lanes; legal or illegal u-turn lanes; permissive or protected only right turn lanes; etc.). The traffic controls lane can include geospatial information of traffic signal lights, traffic signs, and other road objects and related attributes.

The AV operational database 324 can store raw AV data generated by the sensor systems 304-308, stacks 312 - 322, and other components of the AV 302 and/or data received by the AV 302 from remote systems (e.g., the data center 350, the client computing device 370, etc.). In some embodiments, the raw AV data can include HD LIDAR point cloud data, image data, RADAR data, GPS data, and other sensor data that the data center 350 can use for creating or updating AV geospatial data or for creating simulations of situations encountered by AV 302 for future testing or training of various machine learning algorithms that are incorporated in the local computing device 310.

The data center 350 can be a private cloud (e.g., an enterprise network, a co-location provider network, etc.), a public cloud (e.g., an Infrastructure as a Service (IaaS) network, a Platform as a Service (PaaS) network, a Software as a Service (SaaS) network, or other Cloud Service Provider (CSP) network), a hybrid cloud, a multi-cloud, and so forth. The data center 350 can include one or more computing devices remote to the local computing device 310 for managing a fleet of AVs and AV-related services. For example, in addition to managing the AV 302, the data center 350 may also support a ridesharing service, a delivery service, a remote/roadside assistance service, street services (e.g., street mapping, street patrol, street cleaning, street metering, parking reservation, etc.), and the like.

The data center 350 can send and receive various signals to and from the AV 302 and the client computing device 370. These signals can include sensor data captured by the sensor systems 304-308, roadside assistance requests, software updates, ridesharing pick-up and drop-off instructions, and so forth. In this example, the data center 350 includes a data management platform 352, an Artificial Intelligence/Machine Learning (AI/ML) platform 354, a simulation platform 356, a remote assistance platform 358, and a ridesharing platform 360, among other systems.

The data management platform 352 can be a "big data" system capable of receiving and transmitting data at high velocities (e.g., near real-time or real-time), processing a large variety of data and storing large volumes of data (e.g., terabytes, petabytes, or more of data). The varieties of data can include data having different structured (e.g., structured, semi-structured, unstructured, etc.), data of different types (e.g., sensor data, mechanical system data, ridesharing service, map data, audio, video, etc.), data associated with different types of data stores (e.g., relational databases, key-value stores, document databases, graph databases, column-family databases, data analytic stores, search engine databases, time series databases, object stores, file systems, etc.), data originating from different sources (e.g., AVs, enterprise systems, social networks, etc.), data having different rates of change (e.g., batch, streaming, etc.), or data having other heterogeneous characteristics. The various platforms and systems of the data center 350 can access data stored by the data management platform 352 to provide their respective services.

The AI/ML platform 354 can provide the infrastructure for training and evaluating machine learning algorithms for operating the AV 302, the simulation platform 356, the remote assistance platform 358, the ridesharing platform 360, the cartography platform 362, and other platforms and systems. Using the AI/ML platform 354, data scientists can prepare data sets from the data management platform 352; select, design, and train machine learning models; evaluate, refine, and deploy the models; maintain, monitor, and retrain the models; and so on.

The simulation platform 356 can enable testing and validation of the algorithms, machine learning models, neural networks, and other development efforts for the AV 302, the remote assistance platform 358, the ridesharing platform 360, the cartography platform 362, and other platforms and systems. The simulation platform 356 can replicate a variety of driving environments and/or reproduce real-world scenarios from data captured by the AV 302, including rendering geospatial information and road infrastructure (e.g., streets, lanes, crosswalks, traffic lights, stop signs, etc.) obtained from the cartography platform 362; modeling the behavior of other vehicles, bicycles, pedestrians, and other dynamic elements; simulating inclement weather conditions, different traffic scenarios; and so on.

The remote assistance platform 358 can generate and transmit instructions regarding the operation of the AV 302. For example, in response to an output of the AI/ML platform 354 or other system of the data center 350, the remote assistance platform 358 can prepare instructions for one or more stacks or other components of the AV 302.

The ridesharing platform 360 can interact with a customer of a ridesharing service via a ridesharing application 372 executing on the client computing device 370. The client computing device 370 can be any type of computing system, including a server, desktop computer, laptop, tablet, smartphone, smart wearable device (e.g., smartwatch, smart eyeglasses or other Head-Mounted Display (HMD), smart ear pods, or other smart in-ear, on-ear, or over-ear device, etc.), gaming system, or other general purpose computing device for accessing the ridesharing application 372. The client computing device 370 can be a customer's mobile computing device or a computing device integrated with the AV 302 (e.g., the local computing device 310). The ridesharing platform 360 can receive requests to pick up or drop off from the ridesharing application 372 and dispatch the AV 302 for the trip.

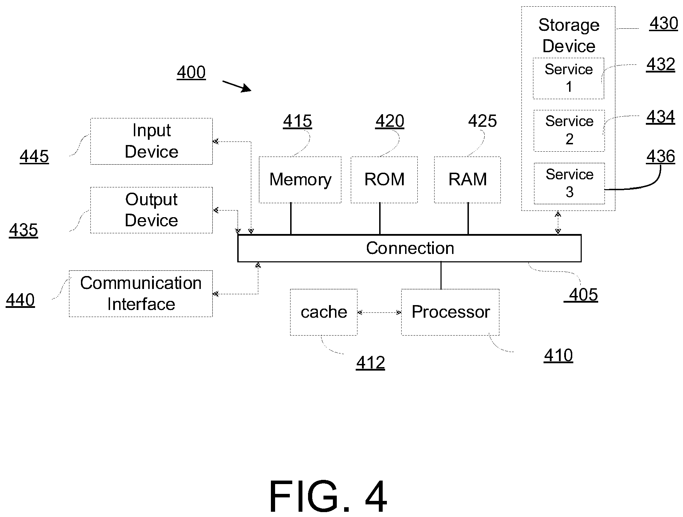

FIG. 4 shows an example of computing system 400 that may be used to implement at least some of the functions reviewed in the present disclosure. In certain instances, a computing device may be incorporated into a sensing apparatus or any component thereof in which the components of the system are in communication with each other using connection 405. Connection 405 can be a physical connection via a bus, or a direct connection into processor 410, such as in a chipset architecture. Connection 405 can also be a virtual connection, networked connection, or logical connection.

In some embodiments, computing system 400 is a distributed system in which the functions described in this disclosure can be distributed within a datacenter, multiple data centers, a peer network, etc. In some embodiments, one or more of the described system components represents many such components each performing some or all of the function for which the component is described. In some embodiments, the components can be physical or virtual devices.

Example system 400 includes at least one processing unit (CPU or processor) 410 and connection 405 that couples various system components including system memory 415, such as read-only memory (ROM) 420 and random access memory (RAM) 425 to processor 410. Computing system 400 can include a cache of high-speed memory 412 connected directly with, in close proximity to, or integrated as part of processor 410.

Processor 410 can include any general purpose processor and a hardware service or software service, such as services 442, 434, and 436 stored in storage device 430, configured to control processor 410 as well as a special-purpose processor where software instructions are incorporated into the actual processor design. Processor 410 may essentially be a completely self-contained computing system, containing multiple cores or processors, a bus, memory controller, cache, etc. A multi-core processor may be symmetric or asymmetric.

To enable user interaction, computing system 400 includes an input device 445, which can represent any number of input mechanisms, such as a microphone for speech, a touch-sensitive screen for gesture or graphical input, keyboard, mouse, motion input, speech, etc. Computing system 400 can also include output device 435, which can be one or more of a number of output mechanisms known to those of skill in the art. In some instances, multimodal systems can enable a user to provide multiple types of input/output to communicate with computing system 400. Computing system 400 can include communications interface 440, which can generally govern and manage the user input and system output. There is no restriction on operating on any particular hardware arrangement, and therefore the basic features here may easily be substituted for improved hardware or firmware arrangements as they are developed.

Storage device 430 can be a non-volatile memory device and can be a hard disk or other types of computer readable media which can store data that are accessible by a computer, such as magnetic cassettes, flash memory cards, solid state memory devices, digital versatile disks, cartridges, random access memories (RAMs), read-only memory (ROM), and/or some combination of these devices.

The storage device 430 can include software services, servers, services, etc., that when the code that defines such software is executed by the processor 410, it causes the system to perform a function. In some embodiments, a hardware service that performs a particular function can include the software component stored in a computer-readable medium in connection with the necessary hardware components, such as processor 410, connection 405, output device 435, etc., to carry out the function.

For clarity of explanation, in some instances, the present technology may be presented as including individual functional blocks including functional blocks comprising devices, device components, steps or routines in a method embodied in software, or combinations of hardware and software.

Any of the steps, operations, functions, or processes described herein may be performed or implemented by a combination of hardware and software services or services, alone or in combination with other devices. In some embodiments, a service can be software that resides in memory of a client device and/or one or more servers of a content management system and perform one or more functions when a processor executes the software associated with the service. In some embodiments, a service is a program or a collection of programs that carry out a specific function. In some embodiments, a service can be considered a server. The memory can be a non-transitory computer-readable medium.

In some embodiments, the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Methods according to the above-described examples can be implemented using computer-executable instructions that are stored or otherwise available from computer-readable media. Such instructions can comprise, for example, instructions and data which cause or otherwise configure a general-purpose computer, special purpose computer, or special purpose processing device to perform a certain function or group of functions. Portions of computer resources used can be accessible over a network. The executable computer instructions may be, for example, binaries, intermediate format instructions such as assembly language, firmware, or source code. Examples of computer-readable media that may be used to store instructions, information used, and/or information created during methods according to described examples include magnetic or optical disks, solid-state memory devices, flash memory, USB devices provided with non-volatile memory, networked storage devices, and so on.

Devices implementing methods according to these disclosures can comprise hardware, firmware and/or software, and can take any of a variety of form factors. Typical examples of such form factors include servers, laptops, smartphones, small form factor personal computers, personal digital assistants, and so on. The functionality described herein also can be embodied in peripherals or add-in cards. Such functionality can also be implemented on a circuit board among different chips or different processes executing in a single device, by way of further example.

**NUMBERED STATEMENTS OF INVENTION:**

1. A method for adjusting calibration of a sensing apparatus, the method comprising:

   receiving data that identifies a location of an associated vehicle;
   estimating locations of a set of features of the associated vehicle based on the data that identifies the location of the associated vehicle;
   evaluating sensor data to identify actual locations of the set of features of the associated vehicle, wherein the sensor data is received from a set of sensors at the sensing apparatus;
   comparing the estimated locations of the set of features with the actual locations of the set of features to identify an offset to associate with the set of sensors such that a calculation can be performed to identify a compensation factor that compensates for the offset associated with the set of sensors; and
   performing the calculation to identify the compensation factor.

2. The method of statement 1, further comprising identifying a location of the sensing apparatus, wherein the actual locations of the set of features are identified based on the identified location of the sensing apparatus and the received data that identifies the location of the associated vehicle.

3. The method of statement 1, further comprising receiving information sent form a communication device at the associated vehicle that includes the data that identifies the location of the associated vehicle.

4. The method of statement 1, further comprising receiving information sent form a computer that includes the data that identifies the location of the associated vehicle, wherein the computer is physically remote from the associated vehicle and the sensing apparatus.

5. The method of statement 1, further comprising updating a parameter at the sensing apparatus to compensate for the offset based on the identification of the compensation factor.

6. The method of statement 1, further comprising:

   receiving data from one or more cameras of the sensing apparatus, wherein the one or cameras are sensors the set of sensors; and

receiving data from a light detecting and ranging (LiDAR) sensor of the sensing apparatus, wherein the LiDAR sensor is a sensor the set of sensors.

7. The method of statement 6, further comprising:

comparing a first set of camera data associated with a first camera of the one or more cameras with a second set of camera data associated with a second camera of the one or more cameras, the comparison identifying relative positions of the set of features of the associated vehicle; and
identifying location information of the set of features to associate with the received LiDAR data, wherein the evaluation of the sensor data includes comparing the relative positions of the set of features with the location information associated with the received LiDAR data.

8. A non-transitory computer-readable storage medium having embodied thereon a program executable by a processor to implement a method for adjusting calibration of a sensing apparatus, the method comprising:

receiving data that identifies a location of an associated vehicle;
estimating locations of a set of features of the associated vehicle based on the data that identifies the location of the associated vehicle;
evaluating sensor data to identify actual locations of the set of features of the associated vehicle, wherein the sensor data is received from a set of sensors at the sensing apparatus;
comparing the estimated locations of the set of features with the actual locations of the set of features to identify an offset to associate with the set of sensors such that a calculation can be performed to identify a compensation factor that compensates for the offset associated with the set of sensors; and
performing the calculation to identify the compensation factor.

9. The non-transitory computer-readable storage medium of statement 8, the program further executable to identify a location of the sensing apparatus, wherein the actual locations of the set of features are identified based on the identified location of the sensing apparatus and the received data that identifies the location of the associated vehicle.

10. The non-transitory computer-readable storage medium of statement 8, the program further executable to receive information sent form a communication device at the associated vehicle that includes the data that identifies the location of the associated vehicle.

11. The non-transitory computer-readable storage medium of statement 8, the program further executable to receive information sent form a computer that includes the data that identifies the location of the associated vehicle, wherein the computer is physically remote from the associated vehicle and the sensing apparatus.

12. The non-transitory computer-readable storage medium of statement 8, the program further executable to update a parameter at the sensing apparatus to compensate for the offset based on the identification of the compensation factor.

13. The non-transitory computer-readable storage medium of statement 8, the program further executable to:

receive data from one or more cameras of the sensing apparatus, wherein the one or cameras are sensors the set of sensors; and
receive data from a light detecting and ranging (LiDAR) sensor of the sensing apparatus, wherein the LiDAR sensor is a sensor the set of sensors.

14. The non-transitory computer-readable storage medium of statement 13, the program further executable to:

compare a first set of camera data associated with a first camera of the one or more cameras with a second set of camera data associated with a second camera of the one or more cameras, the comparison identifying relative positions of the set of features of the associated vehicle; and
identify location information of the set of features to associate with the received LiDAR data, wherein the evaluation of the sensor data includes comparing the relative positions of the set of features with the location information associated with the received LiDAR data.

15. An apparatus comprising:

a communication interface that receives data that identifies a location of an associated vehicle;
a set of sensors that receive sensor data;
a memory; and
a processor that executes instructions out of the memory to:

estimate locations of a set of features of the associated vehicle based on the data that identifies the location of the associated vehicle,
evaluate the received sensor data to identify actual locations of the set of features of the associated vehicle,
compare the estimated locations of the set of features with the actual locations of the set of features to identify an offset to associate with the set of sensors such that a calculation can be performed to identify a compensation factor that compensates for the offset associated with the set of sensors, and
perform the calculation to identify the compensation factor.

16. The apparatus of statement 15, wherein the actual locations of the set of features are identified based on an identified location of the apparatus and the received data that identifies the location of the associated vehicle.

17. The apparatus of statement 15, wherein information is received from a transmitter at the associated vehicle, the information including the data that identifies the location of the associated vehicle.

18. The apparatus of statement 15, wherein information sent form a computer is received that includes the data that identifies the location of the associated vehicle, wherein the computer is physically remote from the associated vehicle and the apparatus.

19. The apparatus of statement 15, wherein further a parameter is updated to compensate for the offset based on the identification of the compensation factor.

20. The apparatus of statement 15, further comprising:

one or more cameras that provide a first portion of the sensor data based on the one or more cameras being included in the set of sensors; and
a ranging (LiDAR) sensor that provides a second portion of the sensor data based on the LiDAR sensor being included in the set of sensors.

**Claims**

1.  A method for adjusting calibration of a sensing apparatus, the method comprising:

receiving data that identifies a location of an associated vehicle;
estimating locations of a set of features of the associated vehicle based on the data that identifies the location of the associated vehicle;
evaluating sensor data to identify actual locations of the set of features of the associated vehicle, wherein the sensor data is received from a set of sensors at the sensing apparatus;
comparing the estimated locations of the set of features with the actual locations of the set of features to identify an offset to associate with the set of sensors such that a calculation can be performed to identify a compensation factor that compensates for the offset associated with the set of sensors; and
performing the calculation to identify the compensation factor.

2.  The method of claim 1, further comprising identifying a location of the sensing apparatus, wherein the actual locations of the set of features are identified based on the identified location of the sensing apparatus and the received data that identifies the location of the associated vehicle.

3.  The method of claim 1 or 2, further comprising receiving information sent form a communication device at the associated vehicle that includes the data that identifies the location of the associated vehicle.

4.  The method of claim 1 or 2, further comprising receiving information sent form a computer that includes the data that identifies the location of the associated vehicle, wherein the computer is physically remote from the associated vehicle and the sensing apparatus.

5. The method of any preceding claim, further comprising updating a parameter at the sensing apparatus to compensate for the offset based on the identification of the compensation factor.

6. The method of any preceding claim, further comprising:

   receiving data from one or more cameras of the sensing apparatus, wherein the one or cameras are sensors the set of sensors; and
   receiving data from a light detecting and ranging (LiDAR) sensor of the sensing apparatus, wherein the LiDAR sensor is a sensor the set of sensors.

7. The method of claim 6, further comprising:

   comparing a first set of camera data associated with a first camera of the one or more cameras with a second set of camera data associated with a second camera of the one or more cameras, the comparison identifying relative positions of the set of features of the associated vehicle; and
   identifying location information of the set of features to associate with the received LiDAR data, wherein the evaluation of the sensor data includes comparing the relative positions of the set of features with the location information associated with the received LiDAR data.

8. A computer-readable medium comprising a program executable by a processor to implement the method of any preceding claim.

9. An apparatus comprising:

   a communication interface that receives data that identifies a location of an associated vehicle;
   a set of sensors that receive sensor data;
   a memory; and
   a processor that executes instructions out of the memory to:

      estimate locations of a set of features of the associated vehicle based on the data that identifies the location of the associated vehicle,
      evaluate the received sensor data to identify actual locations of the set of features of the associated vehicle,
      compare the estimated locations of the set of features with the actual locations of the set of features to identify an offset to associate with the set of sensors such that a calculation can be performed to identify a compensation factor that compensates for the offset associated with the set of sensors, and
      perform the calculation to identify the compensation factor.

10. The apparatus of claim 9 wherein the actual locations of the set of features are identified based on an identified location of the apparatus and the received data that identifies the location of the associated vehicle.

11. The apparatus of claim 9 or 10, wherein information is received from a transmitter at the associated vehicle, the information including the data that identifies the location of the associated vehicle.

12. The apparatus of claim 9 or 10, wherein information sent form a computer is received that includes the data that identifies the location of the associated vehicle, wherein the computer is physically remote from the associated vehicle and the apparatus.

13. The apparatus of any of claims 9 to 12, wherein further a parameter is updated to compensate for the offset based on the identification of the compensation factor.

14. The apparatus of any of claims 9 to 13, further comprising:

   one or more cameras that provide a first portion of the sensor data based on the one or more cameras being included in the set of sensors; and
   a ranging (LiDAR) sensor that provides a second portion of the sensor data based on the LiDAR sensor being included in the set of sensors.

Receive Data that Identifies a Location of an Associated Vehicle
110

Identify Estimated Locations of Features of the Associated Vehicle
120

Evaluate Sensor Data to Identify Actual Locations of the Associated Vehicle Features
130

Perform a Calculation to Identify a Compensation Factor
150

Compare the Actual Locations With the Estimated Locations
140

# FIG. 1

FIG. 2

FIG. 3

EP 4 235 211 A1

FIG. 4

**Europäisches Patentamt**
**European Patent Office**
**Office européen des brevets**

# EUROPEAN SEARCH REPORT

Application Number

EP 23 15 1302

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/221390 A1 (SLOBODYANYUK VOLODIMIR [US] ET AL) 22 July 2021 (2021-07-22) * figure 3 * * paragraphs [0037] – [0041], [0044], [0051], [0053], [0055] * | 1-14 | INV. G01S7/40 G01S7/497 G01S13/86 G01S13/931 G01S17/86 |
| A | WO 2020/203657 A1 (SONY CORP [JP]) 8 October 2020 (2020-10-08) * the whole document * & US 2022/180561 A1 (HIRAISHI KAZUKI [JP]) 9 June 2022 (2022-06-09) * figure 1 * * paragraphs [0033], [0037], [0038], [0084] * | 1-14 | G01S17/931 G01S7/00 G06T7/80 |

**TECHNICAL FIELDS SEARCHED (IPC)**

G01S
G06T

The present search report has been drawn up for all claims

| Place of search | Date of completion of the search | Examiner |
|---|---|---|
| Munich | 29 June 2023 | Rodríguez González |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 15 1302**

This annex lists the patent family members relating to the patent documents cited in the above-mentioned European search report.
The members are as contained in the European Patent Office EDP file on
The European Patent Office is in no way liable for these particulars which are merely given for the purpose of information.

**29-06-2023**

| Patent document cited in search report | | | Publication date | Patent family member(s) | | | Publication date |
|---|---|---|---|---|---|---|---|
| US 2021221390 | A1 | | 22-07-2021 | NONE | | | |
| WO 2020203657 | A1 | | 08-10-2020 | CN | 113692521 | A | 23-11-2021 |
| | | | | US | 2022180561 | A1 | 09-06-2022 |
| | | | | WO | 2020203657 | A1 | 08-10-2020 |

EPO FORM P0459

For more details about this annex : see Official Journal of the European Patent Office, No. 12/82